(19) 

**Europäisches Patentamt**
**European Patent Office**
**Office européen des brevets**

(11) **EP 4 779 353 A1**

(12) **EUROPEAN PATENT APPLICATION**

(43) Date of publication:
**22.07.2026 Bulletin 2026/30**

(51) International Patent Classification (IPC):
**G01S 7/35** (2006.01)   **G01S 7/40** (2006.01)
**G01S 13/34** (2006.01)   **G01S 13/44** (2006.01)
**G01S 13/58** (2006.01)   **G01S 13/87** (2006.01)

(21) Application number: **25152338.7**

(22) Date of filing: **16.01.2025**

(52) Cooperative Patent Classification (CPC):
**G01S 7/354; G01S 7/358; G01S 7/4008;**
**G01S 7/4091; G01S 13/343; G01S 13/44;**
**G01S 13/584; G01S 13/87**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **NXP USA, Inc.**
**Austin, TX 78735 (US)**

(72) Inventors:
• **CIACCI, Massimo**
  **5656AG Eindhoven (NL)**

• **BEKOOIJ, Marco Jan Gerrit**
  **5656AG Eindhoven (NL)**

(74) Representative: **Schwarzweller, Thomas**
**NXP Semiconductors Germany GmbH**
**Intellectual Property Group**
**Beiersdorfstraße 12**
**22529 Hamburg (DE)**

Remarks:
Amended claims in accordance with Rule 137(2)
EPC.

(54) **SINGLE BISTATIC PHASE NOISE ESTIMATOR FOR DISTRIBUTED COHERENT RADAR SYSTEMS**

(57)    Techniques for removing phase noise from baseband signals in a radar system are disclosed. In one example, a received baseband signal is derotated using parameters of a spill-over signal to generate a derotated signal. The derotated signal is decomposed into a real component and an imaginary component. A transform is applied on the real component to produce a transformed signal. A phase noise signal estimate is generated by subtracting the transformed signal from the imaginary component. The phase noise signal estimate is applied to the received baseband signal to generate a phase noise mitigated signal.

FIG. 8

## Description

TECHNICAL FIELD

The present disclosure relates to radar systems, particularly methods and apparatus for phase noise estimation and compensation to enhance dynamic range and signal processing in radar operations

BACKGROUND

Linear frequency modulation (LFM) chirp signals are widely employed in various sensor applications, such as radar, sonar, and ultrasound, due to the ease of hardware implementation for both waveform generation and signal reception. An advantage of linear chirps is that they allow the processing of wideband signals using narrowband techniques. This is achievable through, for example, deramping, dechirping, or stretch processing in the receiver, where the received signal echoes are mixed with the transmitted signal to create a narrowband beat signal, from which target ranges can be accurately estimated. Consequently, high-range resolution measurements with large dynamic range are obtained even when using an analog-to-digital converter (ADC) with a low sampling frequency. The dynamic range is further enhanced by effectively suppressing direct transmitter-receiver (TX-RX) leakage through an analog high-pass filter before data acquisition and by employing digital processing techniques, such as windowing in the range fast Fourier transform (FFT).

One factor in achieving high dynamic range performance in these systems lies in the linearity of the generated chirps. In compact, on-chip devices that operate at high frequencies, the waveform generator, which is often a phase-locked loop (PLL), may exhibit unwanted imperfections in the chirp, collectively termed as phase noise. Phase noise refers to any deviation from the ideal linear chirp, including systematic errors and random errors due to thermal noise, shot noise, flicker noise, and crystal oscillator jitter. This phase noise is an inherent characteristic that negatively impacts the performance of range-Doppler radar systems, especially those with multiple transceivers. While a single-transceiver system can largely mitigate phase noise (since the same local oscillator (LO) signal is used for both transmission and reception, resulting in partial cancellation of phase noise), multiple-transceiver systems experience compounded phase noise effects at the receiver mixer. Within a single transceiver, multiple transmitter antennas carry the same phase noise, and at the receiver side, similar phase noise is received and then decorrelated after the mixer along all receiver paths from a single LO signal.

Uncompensated phase noise varies over time and across sequential chirps, potentially degrading dynamic range performance near a target. This degradation can cause strong echoes to obscure weaker targets in neighboring range cells or within the same range cell but adjacent Doppler cells. For instance, in automotive radar applications, the strong signal from a large object, like a truck, could overshadow the response from a smaller object, such as a pedestrian nearby.

BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.

FIG. 1 is a schematic diagram of a multiple transceiver Frequency-Modulated Continuous Wave (FMCW) radar system with phase noise correction in accordance with some implementations.

FIG. 2 is a diagram illustrating the frequency components of phase noise of a signal in accordance with some implementations.

FIG. 3 is a diagram illustrating the local oscillator frequency output of a chirp generator during a chirp train, highlighting the A chirps from a first head and B chirps from a second head, with a frequency offset applied during transmission in accordance with some implementations.

FIG. 4. is a diagram illustrating the intermediate frequency (IF) range spectra of a radar system, showing the effect of increasing the local oscillator frequency of a transmitting radar head by an offset frequency in a signal in accordance with some implementations.

FIG. 5 is a diagram illustrating the IF range spectra of two radar heads and the presence of spill-over signals without the beat signals from targets in accordance with some implementations.

FIG. 6 is diagram illustrating a phase-noise estimation and suppression technique that mirrors negative frequency components of the phase noise spectrum in accordance with some implementations.

FIG. 7 is a schematic diagram of an example phase noise detector for a phase noise correction module in accordance with some implementations.

FIG. 8 is a schematic diagram of an example phase noise estimation and correction block incorporating an iterative phase noise estimation process in accordance with some implementations.

FIG. 9 is a flow diagram illustrating an example method of phase noise estimation and compensation within a radar system in accordance with some implementations.

FIG. 10 is a flow diagram illustrating an example method of phase-noise compensation in the Doppler dimension within a radar system in accordance with some implementations.

FIG. 11 is a flow diagram illustrating an example method of beamforming to optimize Signal-to-Noise Ratio and improve phase-noise estimation performance within a radar system in accordance with some implementations.

DETAILED DESCRIPTION

Distributed coherent radar systems typically implement phase noise estimation and compensation through signal processing. This approach addresses the fact that down-mixing uses a different Local Oscillator (LO) signal than transmission, leading to an enhancement, rather than suppression, of phase noise. Some phase noise estimators utilize the bistatic signal of both radar heads, leveraging the fact that their phase noise components are conjugated while the target-induced signal components are not. By applying a conjugate product to the two transceiver (TRX) signals, only phase noise remains, amplified by a factor 2 (which can result in phase wrap arounds), effectively canceling the target-related signal components. However, this approach requires that both bistatic path lengths and radar head transfer functions be identical. Achieving this is challenging, as it necessitates the use of a colocated virtual transmit (Tx) antenna and equalization of the transfer functions. Colocated virtual Tx antennas are realized by using only one Tx per frequency band, which results in partitioning the intermediate frequency (IF) spectrum into sub-bands. This partitioning reduces range resolution since the IF bandwidth per sub-band is smaller than the overall IF bandwidth.

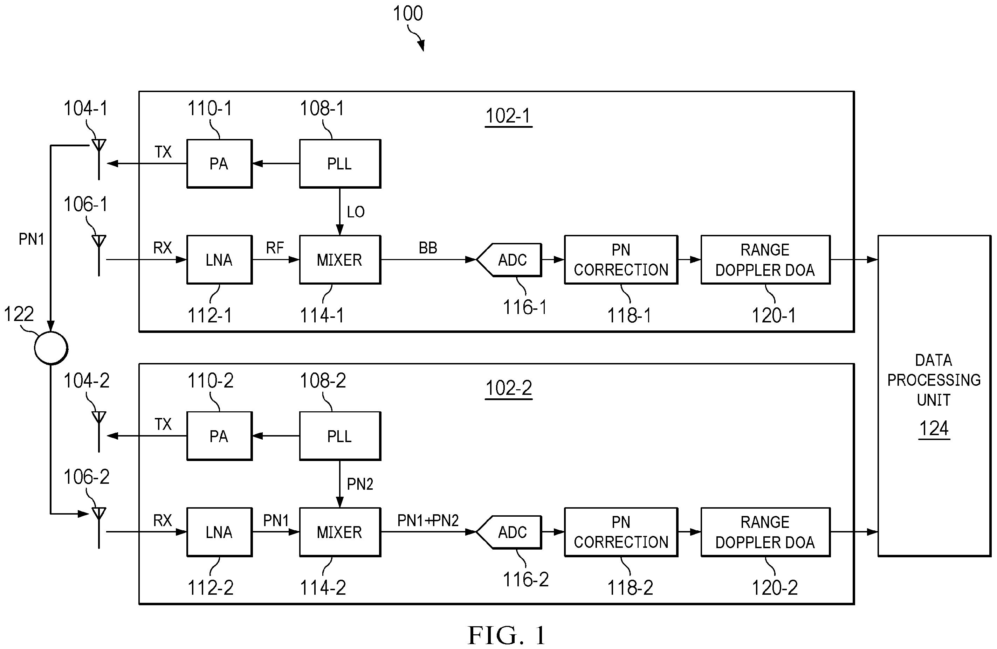

As such, FIG. 1 to FIG. 11 describe a single bistatic phase noise estimator for distributed coherent radar systems, which employs a bistatic signal from one radar head alone to estimate phase noise. This estimator is capable of estimating phase noise using a single bistatic signal, provided that negative frequency components of the spill-over signal are available. As described in greater detail below, this approach captures frequency components below the beat frequency of the bistatic spill-over signal by implementing a Multiple-Input Multiple-Output (MIMO) configuration. In this configuration, only one radar head transmits at a time, and a shift in local oscillator (LO) frequencies ensures that the bistatic signal frequency band starts around, for example, 1 megahertz (MHz), rather than 0 hertz (Hz). This shift maximizes the received spill-over signal power, including the phase noise component that is modulated around it, thereby improving the accuracy of the estimation, Additionally, the MIMO configuration employs beamforming techniques that coherently combine information from all available antennas to estimate the phase-noise signal from the spill-over signal. This configuration provides adequate space for phase noise components without high-pass filtering or folding around the direct current (DC) component, thus enabling effective phase noise estimation.

As described in greater detail below, the single bistatic phase noise estimator implements one or more phase noise estimation methods for obtaining the phase noise signal. In at least some implementations, a first method mirrors frequency components below the beat frequency of the spill-over signal, leveraging the symmetry of phase noise around the carrier when phase noise levels are low. A second method, in at least some implementations, exploits the characteristic that phase noise is minimally present in the real part of a derotated reference beat signal, and largely suppressed by a Hilbert Transform, which extracts other targets beat signals overlapping with the phase noise, and makes them in phase with the imaginary part. By utilizing these methods, the phase noise estimator enhances the accuracy and performance of phase noise estimation and correction, addressing the limitations of previous approaches.

The second method identifies that phase noise predominantly appears in the imaginary part of the derotated reference beat signal but not in the real part. By applying a Hilbert transform, a phase-shifted version of the beat signal in the real part is obtained, which is then subtracted from the imaginary part to estimate the phase noise signal. This approach addresses one or more disadvantages of other phase noise estimators that perform sign detection of the frequency difference between the reference beat signal and other beat signals. Such sign detection typically fails if there are targets at the same positive as well as negative frequency differences between the beat frequencies of the components and the reference signal. However, the phase noise estimator of one or more implementations fixes the sign as positive since the bistatic spill-over signal is used as a reference target, ensuring no beat signals with frequencies lower than that of the spill-over signal. Additionally, by avoiding the need for frequency difference sign detection, the method improves the robustness of phase noise estimation in scenarios with multiple targets.

The resulting phase noise signal estimate is used to cancel phase noise in the radar's received signal. This approach presents several advantages, including the elimination of the need to partition the intermediate frequency (IF) spectrum, which would significantly reduce range resolution. Additionally, this approach prevents the necessity of applying Frequency Division Multiple Access (FDMA), thereby avoiding issues related to over-range targets and strong inband self spill-over signals. FDMA also suffers from inaccuracies in the phase-rotator used to shift the transmitter (TX) frequency, which are effectively mitigated by the present invention. Furthermore, the invention eliminates the requirement for equal transfer functions of both bistatic links, enhancing system flexibility. The phase noise estimator described herein is also compatible with multiple active TX antennas operating within the same frequency band, thereby improving system scalability. Moreover, the phase noise estimator supports multistatic distributed coherent radar (DCR) configurations by removing the need for additional IF spectrum frequency bands for additional radar heads. This scalability is achieved through the approach of having one radar head transmit at a time, ensuring that the IF frequency band is not partitioned as required by prior art methods. Additionally, the phase noise estimator employs a MIMO code designed to maximize the received signal power of the spill-over signal, thereby enhancing the accuracy of its estimation. By leveraging beamforming techniques that coherently combine information from all available antennas, the techniques described herein significantly improve phase-noise estimation and correction performance, ensuring robust operation in complex radar environments.

FIG. 1 illustrates an example hardware architecture for a multiple transceiver radar system 100, which includes a phase noise (PN) digital correction block or module implementing the techniques described herein. In at least some implementations, the PN correction block is positioned early in the radar system's workflow, allowing the PN correction block to process the signal to minimize phase noise before the radar system's main functions, such as standard signal processing and target detection, are performed. Acting as one of the first components to handle the signal, the PN correction block improves the accuracy and quality of target detection by reducing phase noise prior to further analysis.

The radar system 100, in at least some implementations, includes a plurality of transceivers 102, such as a first transceiver 102-1 and a second transceiver 102-2. Each transceiver 102 includes, for example, a transmit (TX) antenna (aerial) 104 (illustrated as TX antenna 104-1 and TX antenna 104-2) and a receive (RX) antenna (aerial) 106 (illustrated as RX 106-1 and RX aerial 106-2). The transmit antenna 104 receives a transmit signal that is generated by a signal generator 108, such as a phase-locked loop (PLL) circuit (illustrated as PLL 108-1 and PLL 108-2) and amplified by a transmit amplifier 110, such as a power amplifier (PA) (illustrated as PA 110-1 and PA 110-2).

On the receiver side of each transceiver 102, a received signal from the receive antenna 106 is amplified by a receive amplifier 112, such as a low noise amplifier (LNA) (illustrated as LNA 112-1 and LNA 112-2), and the amplified signal is then provided to a mixer 114 (illustrated as mixer 114-1 and mixer 114-2). The mixer 114 mixes the amplified signal with the transmit signal from the signal generator 108 to generate an analog baseband signal, which is provided to an analog-to-digital converter (ADC) 116 (illustrated as ADC 116-1 and ADC 116-2). The ADC 116 converts the analog baseband signal to a digital baseband signal and provides this digital baseband signal to a phase noise correction module (block) 118 (illustrated as PN correction module 118-1 and PN correction module 118-2). The PN correction module 118 suppresses phase noise from the digital baseband signal, producing a phase noise-corrected signal that is sent to a range-Doppler direction of arrival (DOA) module 120 (illustrated as DOA module 120-1 and DOA module 120-2). This module 120 determines the distance and relative velocity of a target 122 identified in the baseband signal, along with the direction of arrival of the received signal. These parameters are then used by a data processing unit 124 to identify one or more targets 122 within the view of the transceiver system 100. In at least some implementations, the PN correction module 118 is implemented as hardware, circuitry, software, or a combination thereof

As described above, phase noise may be introduced into signals throughout the transceiver system 100, as shown in FIG. 1. A first phase noise component (PN1) is introduced into the transmit signal from the first transceiver 102-1, generated by the first signal generator 108-1 and transmitted by the first transmit antenna 104-1. This component carries through to the received signal at the second transceiver 102-2, where it is received by the second receive antenna 106-2 and then mixed with a second phase noise component (PN2) introduced by the second signal generator 108-2. A combination of both phase noise components PN1+PN2, together termed $\phi(t)$, is then present in the analog baseband signal provided to the ADC 116-2 in the second transceiver 102-2. A similar combination of phase noise components is provided to the ADC 116-1 in the first transceiver 102-1. The PN correction module 118 in each transceiver 102 is configured to separate out this phase noise and subtract it from the received digital baseband signal.

As described in greater detail below, the phase noise mitigation techniques implemented by the PN correction blocks 118 effectively cancel or at least reduce phase noise, particularly in systems where multiple PLLs operate simultaneously, such as in imaging or distributed radar. These techniques enhance dynamic range, especially around strong targets, where phase noise spectral shoulders could otherwise limit the sensor's dynamic range. Unlike some techniques, the updated phase noise mitigation techniques described herein operate with a fixed parameter, setting the intermodulation (IM) tone sign to a predetermined value, which avoids estimation errors when IM products have symmetrical positive and negative frequency offsets. This approach is referred to as a "blind" approach since it works directly on the received baseband signal without requiring a synthetic target on-chip, additional measured signals, or a specific antenna configuration. Furthermore, the phase noise mitigation techniques described herein are well-suited for both multiple-transceiver and single-transceiver radar systems.

In general, the operations implemented by the PN correction blocks 118 for mitigating phase noise include isolating the phase noise realization and canceling the phase noise from the received baseband signal. In at least some implementations, the PN correction blocks 118 achieve effective phase noise mitigation by directly focusing on estimating the exact realization of phase noise, rather than relying on statistical averages, and operate with minimal latency. As described in greater detail below, in at least some implementations, the PN correction blocks 118 begin by processing the digital baseband signal. If the receiving side of the transceiver 102 functions as a non-IQ (real-only) receiver, analytic extension is applied to retain only positive range frequencies. Next, the strongest spectral peak is identified to determine the dominant beat frequency. The complex baseband is then demodulated by frequency-shifting and normalizing, bringing the strongest beat frequency to DC and locking its phase on the IQ plane at 1+j0. Afterward, the signal is separated into real and imaginary components. The imaginary part captures most of the phase noise along with intermodulation beat signals, while the real part includes mainly intermodulation terms with minimal phase noise. A Hilbert Transform (HT) is applied to the real part of the baseband signal, producing a transformed signal that is then subtracted from the imaginary part to isolate the phase noise realization for each chirp. During this subtraction operation, the intermodulation (IM) tone sign parameter is fixed to a value of 1, rather than being estimated. This fixed sign parameter leverages prior knowledge that there are no target signals below the beat frequency of the spill-over signal, thereby simplifying the phase noise estimation and improving robustness. This approach avoids errors that arise from estimating signs, especially when IM tones are buried within the phase noise. Additionally, the phase noise estimate may be conditioned or validated based on prior knowledge of phase noise spectral density, taking advantage of symmetrical characteristics around the carrier or known amplitude regularity. Finally, the phase noise realization is subtracted from the incoming signal, allowing the same estimate to be applied across all receiver paths in a multiple transceiver system given that all the receivers in the system will experience the same phase noise.

In summary, the phase noise correction method described herein applies a sequence of steps to isolate and mitigate phase noise from the baseband signal, utilizing a fixed intermodulation tone sign parameter during the subtraction operation. This approach leverages prior knowledge about the frequency of the spill-over signal, ensuring robust performance across multiple transceivers without additional complexity. By simplifying the phase noise estimation, this method enhances dynamic range and accuracy in scenarios with closely spaced or overlapping targets.

The following is a brief overview of the signal model and phase noise properties for a radar transceiver system, such as the system 100 illustrated in FIG. 1. First the signal model is discussed. Assume a single chirp s(t) is transmitted by a radar transceiver 102, defined as:

$$s(t) = e^{j2\pi(f_c t + \frac{\beta t^2}{2})} e^{jPN(t)}, \quad t \in [0, T] \qquad \text{(EQ. 1)},$$

Where $t$ denotes time, $j$ is the imaginary unit used to represent sinusoidal and oscillating signals (with $j = \sqrt{-1}$), $f_c$ denotes the carrier frequency, $\beta = \frac{B}{T}$ is the chirp slope, T is the chirp duration, and PN(t) is the undesired phase noise term due to, for example, hardware imperfections. The transmitted signal s(t) impinges on targets present in the field of view of the transceiver and reflects back with a time delay $\tau_i$ proportional to the target range. The received RF signal r(t) before the mixer is defined as:

$$r(t) = \Sigma_i A_i e^{j\theta_i} e^{j2\pi(f_c(t - \tau_i) + \frac{\beta(t - \tau_i)^2}{2})} e^{j\phi_i(t - \tau_i)} + w(t) \qquad \text{(EQ. 2)},$$

where $A_i$ represents the amplitude of the reflected signal from the i-th target, $\theta_i$ is the phase shift associated with the i-th target, $\tau_i$ is the time delay related to the target's range, and w(t) denotes additive noise.

The receiver side of the transceiver 102 then performs operations such as deramping, dechirping, or stretch processing by mixing the received signal with a locally generated version of the chirp. This operation results in an analog baseband signal x(t), expressed as:

$$x(t) = \Sigma_i A_i e^{j(\omega_i t + \theta_i)} e^{j\phi_i(t)} + w(t) \qquad \text{(EQ. 3)},$$

where $\omega_i$ is the beat frequency associated with the i-th target, and $\phi_i(t)$ is a random process derived from the phase noise realization *PN(t),* having zero mean and limited bandwidth (e.g., 1 MHz).

In traditional radar systems using a single local oscillator (LO) for both transmission and reception, the phase noise *PN(t)*, is correlated between the transmitted and received signals, leading to partial phase noise cancellation due to the mixing process. This effect can be modeled by a comb filter $g_i$, resulting from the mixing operation:

$$\phi_i(t) = (g_i * \phi)(t) \qquad (EQ. 4),$$

where * denotes convolution. The comb filter $g_i$ depends on the LO configuration and is given by:

$$g_{i,HPF}(t) = \delta(t) - \delta(t - \tau) \qquad (EQ. 5),$$

with $\delta(t)$ being the Dirac delta function. This high-pass filter (HPF) effect models the phase noise decorrelation at close ranges, effectively suppressing phase noise.

The frequency response of this filter is:

$$G_{i,HPF}(\tau, \Delta f) = |2 \sin(\pi \Delta f \tau)| \qquad (EQ. 6),$$

where $G_{i,HPF}(\tau, \Delta f)$ is the magnitude of the frequency response, depending on the time delay $\tau$ and the frequency offset $\Delta f$, which represents the frequency difference between the target around which phase noise is modulated, and the frequency where phase noise is observed.

The phase noise $\phi(t)$ can be expressed as:

$$\phi(t) = PN(t) \qquad (EQ. 7),$$

This relationship is derived from the Fourier Transform:

$$FT\{\delta(t) - \delta(t - \tau)\} = 1 - e^{-j\omega\tau} \Rightarrow |G| = |2 \sin(\frac{\omega\tau}{2})| \qquad (EQ. 8),$$

where $\omega$ is the angular frequency, related to the standard frequency *f* by $\omega = 2\pi f$. The Fourier Transform *FT* of $\delta(t) - \delta(t-\tau)$ gives the complex expression 1 - $e^{-j\omega\tau}$, with |G| representing the magnitude of the frequency response.

These equations illustrate how, in single LO systems, the phase noise is partially canceled due to the inherent correlation between the transmitted and received signals, resulting in a high-pass filtering effect of the phase noise. This suppression is significant for close-range targets, as indicated by EQ. 6. However, in systems with multiple transceivers utilizing independent LO signals, the phase noise from each LO is uncorrelated. In such cases, the phase noise does not undergo the same high-pass filtering effect, and EQ. 6 to EQ. 8 are no longer directly applicable. The phase noise remains in the received signal without significant suppression, leading to increased phase noise power.

As described below, to address this challenge, the PN correction module 118 of one or more implementations, implements phase noise estimation and compensation techniques that avoid the need for complex filtering operations and dependency on LO configurations. By leveraging the characteristics of the spill-over signal, which is a direct path signal resulting from leakage between the transmitting antennas 104 and the receiving antennas 106, the PN correction module 118 can directly estimate and compensate for the phase noise without relying on comb filters or analyzing phase noise decorrelation effects as in EQ. 6 to EQ. 8.

Next, the properties of phase noise are described. Phase noise $\phi(t)$ is a real-valued signal that causes a frequency deviation $\Delta\omega_c(t)$ of the carrier. The frequency deviation $\Delta\omega_c(t)$ represents the instantaneous change in the carrier frequency caused by phase noise. The phase-modulated phase noise signal is given by:

$$s_\phi(t) = e^{j\phi(t)} \qquad (EQ. 9),$$

and the carrier signal with phase noise $s_c(t)$ can be written as:

$$s_c(t) = e^{j\omega_c t} \cdot e^{j\phi(t)} = e^{j(\omega_c t + \phi(t))} = e^{j(\omega_c + \Delta\omega_c(t))t} \qquad (EQ. 10),$$

where $\omega_c$ is the angular carrier frequency related to the carrier frequency by $f_c$ by $\omega_c = 2\pi f_c$, and $\Delta\omega_c(t)$ is the instantaneous frequency deviation caused by the phase noise $\phi(t)$.

Phase noise can be compensated by adjusting the carrier frequency by $-\Delta\omega_c(t)$, which is equivalent to multiplying the signal $s_c(t)$ by $e^{-j\Delta\omega_c(t)t}$, resulting in:

$$s_c(t) = e^{j(\omega_c + \Delta\omega_c(t))t} \cdot e^{-j\Delta\omega_c(t)t} = e^{j\omega_c t} \quad (\text{EQ. 11}).$$

The phase noise spectrum of the signal $s_\phi(t)$ in EQ 9 is nearly symmetric because the phase noise signal $\phi(t)$ is a real-valued signal. Assuming for ease of analysis that $\phi(t)$ is deterministic and is equal to:

$$\phi(t) = A_p \cos(\omega_p t) \quad (\text{EQ. 12}),$$

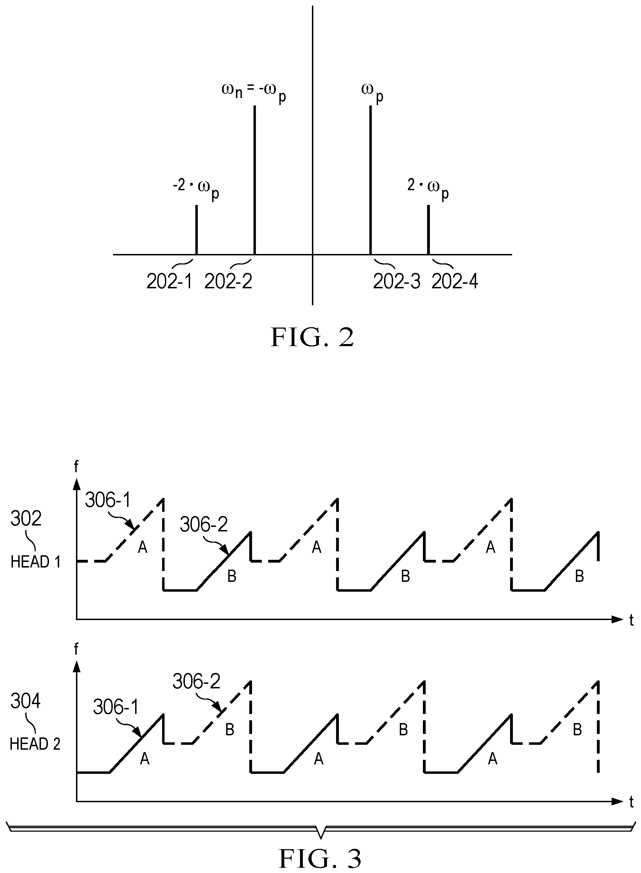

where, $A_p$ is the amplitude of the phase noise component, which determines the strength of the phase fluctuations, and $\omega_p$ is the angular frequency of the phase noise component, related to the frequency $\omega_p = 2\pi f_p$. Under this assumption and for a sufficiently small $A_p$, the spectrum of the phase noise signal consists of a DC component and a series of positive and negative frequency components 202 (illustrated as components 202-1 to 202-4), as shown in FIG. 2. These components 202 are spaced by integer $k$ multiples of $\omega_p$ (e.g., $k \cdot \omega_p$), and their amplitudes scale according to Bessel functions, as known from frequency and phase modulation theory.

The phase relationship between the positive and negative frequency components is given by:

$$e^{j w_n t} = -e^{-j w_p t} \quad (\text{EQ. 13}).$$

This relationship implies that if the negative frequency components of the phase noise are known, the positive frequency components can be derived. The nearly symmetric nature of the phase noise spectrum highlights the real-valued nature of $\phi(t)$, emphasizing the spectral symmetry inherent to phase noise.

The PN correction module 118, in at least some implementations, exploits this symmetry and the known characteristics of the spill-over signal to estimate and compensate for phase noise directly, without relying on comb filters or analyzing phase noise decorrelation effects as in EQ. 6 to EQ. 8. This approach simplifies phase noise handling across all receiver paths, reduces computational complexity, and improves performance, especially in systems with multiple transceivers using independent LO signals. By avoiding the dependency on comb filters and decorrelation functions, the techniques of one or more implementations eliminate the need for analyzing phase noise behavior at specific frequency offsets or ranges. Instead, the PN correction module 118 uses the spill-over signal as a reference, taking advantage of the fact that there can be no beat signals with frequencies below the spill-over signal's beat frequency in practical scenarios. This allows the PN correction module 118 to fix the intermodulation tone sign parameter, simplifying the estimation process and enhancing robustness against nearby strong targets. This approach ensures efficient phase noise compensation across all transceiver paths, even for far-range targets where thermal noise dominates. By applying a consistent phase noise estimation method, the PN correction module 118 achieves improved performance while reducing computational complexity, making the system more reliable and easier to implement in distributed coherent radar applications.

In at least some implementations, the radar system 100 of FIG. 1 is configured as a Distributed Coherent Radar (DCR) system, which is a network of multiple spatially separated radar transceivers operating in a synchronized and phase-coherent manner. In these configurations, the phase noise estimation approach implemented for the DCR system involves one radar head transmitting while the other radar head only receives. The roles of which radar head is transmitting and which is receiving are alternated in subsequent chirps of the chirp train. For example, as illustrated in FIG. 3, during chirps 306 labeled "A" (e.g., chirp 306-1), the first radar head 302 transmits and the second radar head 304 receives, and during chirps 306 labeled "B" (e.g., chirps 306-2), the second radar head 304 transmits and the first radar head 302 receives. Different interleaving patterns of "A" and "B" chirps 306 are possible. For example, the first radar head 302 might transmit during the first half of the chirps 306, while the second radar head 304 transmits during the second half.

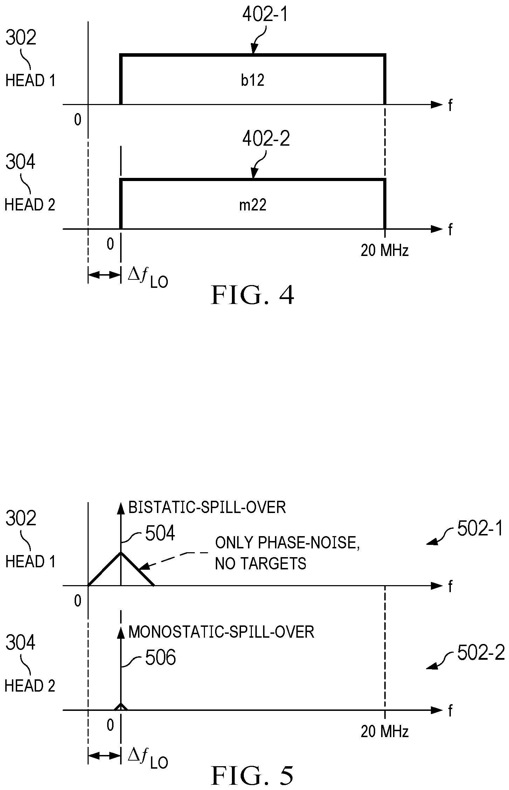

The LO frequency of the transmitting radar head, in at least some implementations, is increased by a frequency offset $\Delta f_{LO}$ during its transmission periods to facilitate phase noise estimation. This results in the Intermediate Frequency (IF) range spectra 402 (illustrated as IF range spectra 402-1 and IF range spectra 402-2) shown in FIG. 4, where the frequency band of the bistatic signal $b12$ between radar heads 302, 304 does not start at zero IF frequency due to the LO frequency shift. In the example shown in FIG. 4, $b12$ refers to a bistatic signal, which is a signal that is transmitted by the second radar head 304 and received by the first radar head 302, and $m22$ refers to a monostatic signal, which is a signal that is transmitted and received by the second radar head 304.

In practical DCR systems, there is a direct path due to leakage between the transmitting antenna and the receiving antenna of different radar heads. This results in a bistatic spill-over signal between the radar heads. The strength of this spill-over signal depends on the distance between the sensors but has been observed to be sufficiently strong when the sensors are spaced a few centimeters (e.g., 40 cm) apart. A $\Delta f_{LO}$ of around a few megahertz (e.g., 1 MHz) is sufficient to prevent strong phase noise signal components from being received at negative frequencies, which would otherwise be suppressed by the high-pass filter in the analog front end. The exact value of this $\Delta f_{LO}$ offset depends on the bandwidth of the PLL used in the signal generators 108, and on the bandwidth of phase noise that is to be suppressed.

FIG. 5 shows the IF range spectra 502 (illustrated as IF range spectra 502-1 and IF range spectra 502-2) of both radar heads 302, 304 in the presence of the spill-over signal 504, 506 but without the beat signals of targets. In the first radar head 302, the spill-over results in a bistatic spill-over signal at frequency $\Delta f_{LO} + f_{b_s}$ where $f_{b_s}$ is the frequency of the beat signal of the spill-over signal, which is dependent on the spacing between the radar heads 302, 304. FIG. 5 also illustrates the phase noise components 508, 510 around the spill-over signal 504, 506. These components are significant in the IF spectrum of the first radar head 302 but are almost completely suppressed in the second radar head 304. This occurs because the received signal in the first radar head 302 is down-mixed with a different oscillator than the one used for transmission, resulting in phase noise components that are not canceled out.

It is noted that there cannot be beat signals with frequencies below $f_{b_s}$ because the signal path via any target is longer than the direct signal path between the radar heads 302, 304. This observation leads to the conclusion that all frequency components below $f_{b_s}$ are due to phase noise. These phase noise components, in at least some implementations, are used to reconstruct the complete phase noise signal. The frequency components below $f_{b_s}$ can be affected by the phase noise of targets with beat frequencies just above $f_{b_s}$, especially if they have comparable Signal-to-Noise Ratio (SNR) as the spill-over signal and have beat frequencies close to $f_{b_s}$. However, targets with low SNR will not significantly impact the phase noise estimation because their phase noise contributions are relatively low.

Leveraging the fact that all frequency components below $f_{b_s}$ are attributed to phase noise, the PN correction module 118 utilizes these components to reconstruct and compensate for the phase noise in the received signal. To achieve this, the PN correction module 118 implements one or more techniques that estimate the phase noise by processing the spill-over signal. These techniques include mirroring the negative frequency components of the phase noise spectrum, and a technique that simplifies phase noise estimation by fixing the intermodulation tone sign parameter.

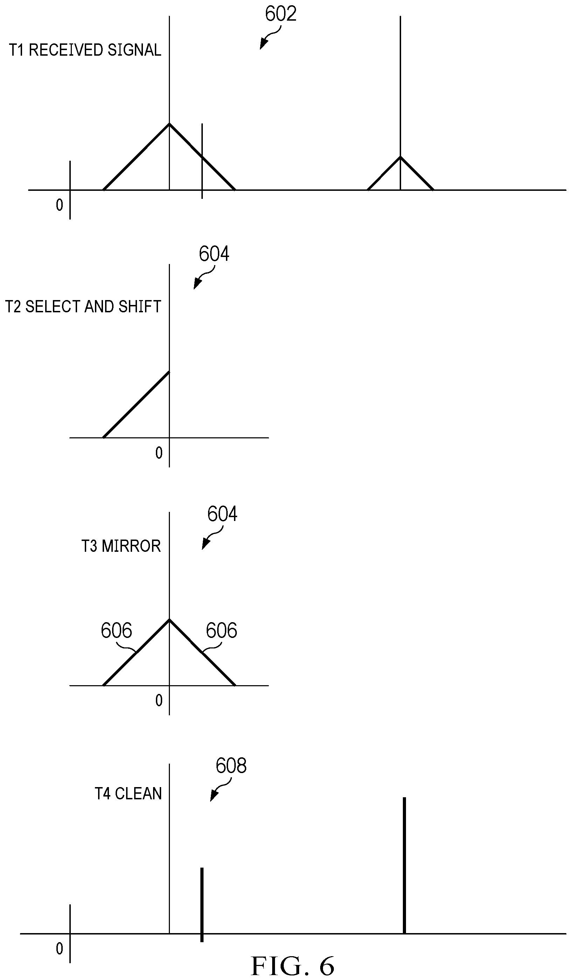

When implementing the first technique, the PN correction module 118 leverages the symmetry in the phase noise spectrum due to the real-valued nature of the phase noise signal. This technique is illustrated by the example shown in FIG. 6. At T1, the frequency components $S_p(f)$ of the received signal 602 that are below and including the beat frequency $f_{b_s}$ of the spill-over signal are selected. Mathematically, this involves choosing $S_p(f)$ for all frequencies $f \leq f_{b_s}$. The spill-over signal, resulting from leakage between the transmitting and receiving antennas of different radar heads, provides a strong reference. Since any target reflections will have beat frequencies higher than $f_{b_s}$ (because the path via any target is longer than the direct path between the radar heads), the frequency components below $S_c(f)$ are dominated by phase noise and do not contain target information.

Next, at T2, the selected spectrum $S_p(f)$ 604 is shifted to lower frequencies so that the beat frequency $S_p(f)$ becomes zero in the new spectrum $S_c(f)$. This is achieved by, for example, subtracting $f_{b_s}$ from the frequency axis:

$$S_c(f) = S_p\big(f + f_{b_s}\big), \text{ for } f \leq f_{b_s} \qquad \text{(EQ. 14)}.$$

By aligning the spill-over signal's beat frequency to zero, the subsequent mirroring process is simplified, focusing on the phase noise components relative to the spill-over signal.

At T3, the frequency domain representation of the phase noise signal $S_\phi(\omega)$ is then obtained by mirroring the negative frequency components of $S_c(f)$ 606 to the positive frequency side. Specifically, for frequencies $-\Delta\omega_{LO} \leq \omega_1 \leq 0$, the mirrored spectrum is calculated as:

$$S_\phi(\omega) = S_c(\omega_1) - S_c^*(-\omega_1) \qquad \text{(EQ. 15)},$$

where $\Delta\omega_{LO}$ represents the LO bandwidth, which defines the range of angular frequencies over which the LO operates effectively and determines the extent of frequency components considered during the mirroring process, $S_c^*(-\omega_1)$ is the complex conjugate of $S_c(-\omega_1)$. This mirroring exploits the symmetry of the phase noise spectrum, enhancing the phase noise components while suppressing any residual symmetrical components or noise that may be present.

Subsequently, the time-domain representation of the phase noise signal $s_\phi(t)$ is obtained by performing the inverse Fourier Transform of $S_\phi(\omega)$:

$$s_\phi(t) = \mathcal{F}^{-1}\big(S_\phi(\omega)\big), \qquad \text{(EQ. 16)},$$

where $\mathcal{F}^{-1}$ denotes the inverse Fourier Transform. This step converts the frequency domain representation back into the time domain, yielding an estimate of the phase noise signal over time.

At T4, the estimated phase noise signal $s_\phi(t)$ is used to create a signal $s_o(t)$ 608 with suppressed phase noise. This is achieved by multiplying the original received signal $s_i(t)$ by $e^{-jarg(s_\phi(t))}$:

$$s_o(t) = s_i(t) \cdot e^{-j\mathrm{arg}\left(s_\phi(t)\right)}, \quad (EQ. 17).$$

Here, arg $(s_\phi(t))$ represents the instantaneous phase of the estimated phase noise signal, and the complex exponential $e^{-jarg(s_\phi(t))}$ effectively cancels the phase noise when multiplied with the received signal. This operation can be interpreted as rotating the phase of the received signal by the negative of the estimated phase noise, thereby compensating for the phase fluctuations introduced by phase noise.

This technique can result in significant suppression of phase noise if the SNR of the spill-over signal is relatively high compared to the phase noise level. The strength of the spill-over signal ensures that the phase noise estimation is accurate, as the phase noise dominates the selected frequency components.

While this first technique leverages the symmetry of the phase noise spectrum and can achieve phase noise suppression under certain conditions, it has some limitations in terms of performance and robustness. To overcome these limitations and provide a more reliable phase noise estimation, the PN correction blocks 118, in at least some implementations, implements the second technique, which simplifies the estimation process by fixing the intermodulation tone sign parameter. This technique enhances robustness and addresses the challenges posed by targets with symmetric frequency offsets.

The second technique is also advantageous over current techniques that fail when there are targets with a similar strength and the same positive and negative frequency distance $\Delta f$ from the beat frequency of the reference signal. They also fail in cases where beat signals of targets are hidden within the phase noise of the reference signal. For example, these methods typically extract the IM tones, which are frequency-shifted beat signals of targets, from the real part of the phase noise signal and subtract them from the imaginary part. The extraction uses the Hilbert Transform and requires the estimation of the sign of the frequency offset for each IM tone. However, the estimation of this sign can fail when there are IM products with similar strength at the same positive and negative frequency distance $\Delta f$. The estimation of the sign also fails if there are IM products hidden within the phase noise of the reference target.

The second technique implemented by the PN correction blocks 118 simplifies phase noise estimation by fixing the IM tone sign parameter. Specifically, the parameter $\hat{s}_i$ (which represents the sign of the frequency offset) to 1 for all i. This is possible because, when the estimator is applied to the spill-over signal, there can be no targets with a beat frequency, and, thus, IM tones, below the beat frequency of the spill-over signal. By fixing the sign parameter, the second technique simplifies the estimation process and enhances robustness, avoiding failures associated with sign estimation errors.

In this technique, the received signal x(t) can be expressed as:

$$x(t) = e^{j\phi(t)} \sum_i A_i \, e^{j(\omega t + \Theta_i)} + n(t) \qquad (EQ. 18),$$

where $\phi(t)$ represents the phase noise, $A_i$ are the amplitudes of the target reflections, $\omega_i$ are the beat frequencies of the targets, $\Theta_i$ are the phases of the targets, and n(t) is the additive noise.

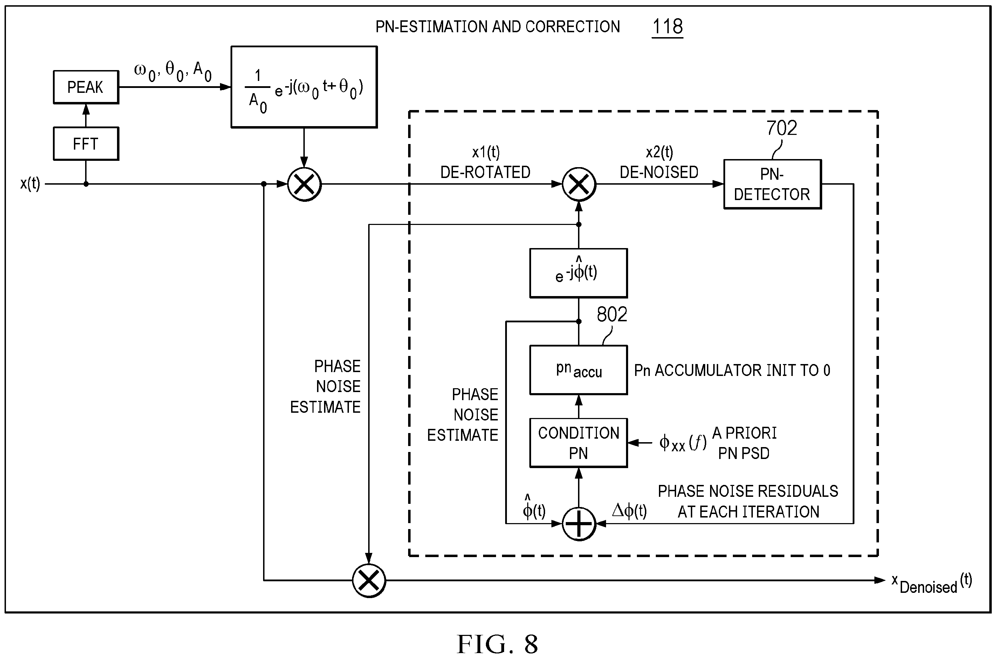

To isolate the phase noise, the PN correction module 118 derotates and scales (as shown in figure 8) the received signal using the known parameters of the spill-over signal (the strongest reflection). This process results in signal $x_1(t)$:

$$x_1(t) = e^{j\phi(t)} + \sum_{i \neq 0} B_i \, e^{j(\omega_i t + \Theta_i) + \phi(t)}), \qquad (EQ. 19),$$

with $B_i = \dfrac{A_i}{A_0}$, $A_0$ is the amplitude of the spill-over signal, $\omega_0$ is the beat frequency of the spill-over signal, and $\Theta_0$ is the phase of the spill-over signal. This operation effectively brings the spill-over signal to DC and aligns its phase to zero, simplifying the analysis by focusing on the phase noise and IM tones associated with other targets.

The PN correction module 118 the decomposes the signal $x_1(t)$ into its real and imaginary components (parts):

$$x_{1,Re}(t) = \cos\left(\phi(t)\right) + \sum_{i \neq 0} B_i \cos\left((\omega_i - \omega_0)t + \Theta_i - \Theta_0 + \phi(t)\right) \qquad (EQ. 20),$$

$$x_{1,Im}(t) = \sin\big(\phi(t)\big) + \sum_{i\neq 0} B_i \sin\big((\omega_i - \omega_0)t + \Theta_i - \Theta_0 + \phi(t)\big) \qquad \text{(EQ. 21)},$$

where $\omega_i - \omega_0$ represents the frequency offset of each target relative to the spill-over signal, and $\Theta_i - \Theta_0$ represents the phase offset.

Assuming that $\phi(t)$ is small (e.g., less than 10 degrees Root Mean Square (RMS)), the trigonometric functions can be approximated as follows:

$$\cos(\phi(t)) \approx 1 \qquad \text{(EQ. 22)},$$

$$\sin(\phi(t)) \approx \phi(t) \qquad \text{(EQ. 23)},$$

Applying these approximations simplifies the expressions for the real and imaginary parts:

$$x_{1,Re}(t) = 1 + \sum_{i\neq 0} B_i \cos\big((\omega_i - \omega_0)t + \Theta_i - \Theta_0 + \phi(t)\big) \qquad \text{(EQ. 24)},$$

$$x_{1,Im}(t) = \phi(t) + \sum_{i\neq 0} B_i \sin\big((\omega_i - \omega_0)t + \Theta_i - \Theta_0 + \phi(t)\big) \qquad \text{(EQ. 25)},$$

This leads to the observation that $x_{1,Re}(t)$ does not include phase-noise of the spill-over, whereas $x_{1,Im}(t)$ does. Notice that the phase noise is modulated not only around the spill-over abut also around each target. The latter is present in both real and imaginary terms. This linear approximation allows the PN correction module 118 to treat the phase noise $\phi(t)$ as a small perturbation, facilitating its isolation from the IM tones. This statement becomes increasingly true when the operation is repeated in a loop (as in figure 8), where at each iteration the residual phase noise is reduced.

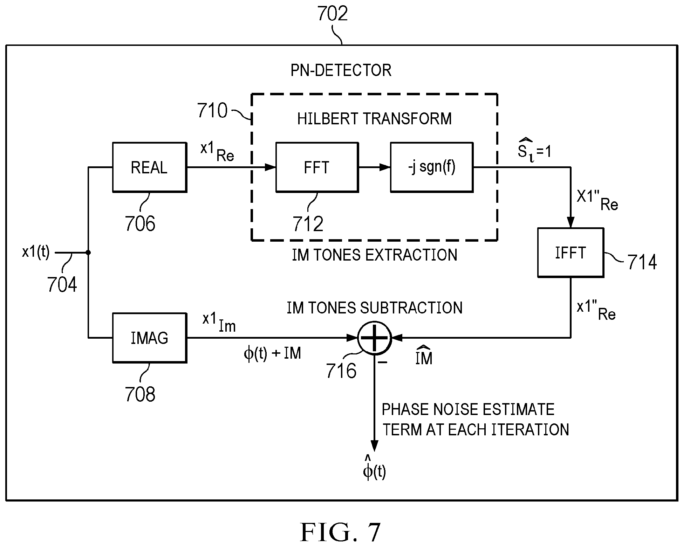

A PN detector 702 (FIG. 7) component of the PN correction module 118 extracts the IM tones from the real part of the signal by applying the Hilbert Transform $\mathcal{H}$ to $x'_{1,Re}(t)$ The Hilbert transform operation, in at least some implementations, includes multiplying the frequency domain representation by $-j$ for positive frequencies to generate a modified frequency domain representation, and then applying an inverse Fourier transform to yield $x''_{1,Re}(t)$:

$$x''_{1,Re}(t) = \mathcal{H}\left(x'_{1,Re}(t)\right) = \text{sign}(\omega_i - \omega_0)\sum_{i\neq 0} B_i \sin(\omega_i - \omega_0)t + \Theta_i - \Theta_0 + \phi(t)) \quad \text{(EQ. 26)}.$$

By making use of the fact that the Hilbert Transform rephases the intermodulation tones from all targets on the real part (cosine terms in EQ. 24) as they appear in the imaginary part (EQ. 25), the PN detector 702 obtains such signal in $x''_{1,Re}(t)$.

Under the assumption that sign $\hat{s} = \text{sign}(\omega_i - \omega_0)$, the PN detector 702 obtains the phase noise $\phi(t)$ by subtracting $x''_{1,Re}(t)$ from $x_{1,Im}(t)$, such that:

$$\phi(t) = x_{1,Im}(t) - x''_{1,Re}(t) \qquad \text{(EQ. 27)}.$$

In case that the estimation is applied on the spill-over signal and given that the IM signals have a positive $\omega_i - \omega_0$, the PN correction module 118, therefore, sets $\hat{s}_i = 1$ instead of estimating it.

In other phase noise estimation methods, the sign $\hat{s} = \text{sign}(\omega_i - \omega_0)$ associated with each IM tone is estimated to accurately isolate and subtract the IM components. However, these methods encounter significant challenges when there are targets with similar strengths and identical positive and negative frequency offsets $\Delta f$ from the beat frequency of the reference signal. Additionally, these methods typically fail in scenarios where beat signals of targets are obscured within the phase noise of the reference signal. The extraction process relies heavily on the accurate estimation of the sign of each IM tone's frequency offset, which can lead to errors and ineffective phase-noise compensation when faced with symmetric IM tones or hidden beat signals.

However, the PN correction module 118 simplifies the phase noise estimation by fixing the IM sign parameter $\hat{s}$ to 1 for all $i$. This modification is possible because, in the configuration of one or more implementations, when the estimator is applied to the spill-over signal, there are inherently no targets with beat frequencies below the spill-over signal's beat frequency $w_0$. Consequently, all IM tones present have positive frequency offsets relative to the spill-over signal. By fixing fixing $\hat{s}_i = 1$, the PN correction module 118 eliminates the need to estimate the sign of each IM tone's frequency offset, thereby avoiding the associated estimation errors that occur in traditional methods.

This approach implemented by the PN correction block offers several advantages. First, this approach eliminates sign estimation errors, removing the dependency on accurately determining the sign of each IM tone, which is particularly beneficial in environments with symmetric frequency offsets or when IM tones are embedded within the phase noise. Second, this approach enhances robustness, ensuring that phase-noise estimation remains reliable even in the presence of multiple targets with similar strengths and symmetrical frequency offsets, as well as in scenarios where IM tones are obscured by phase noise. Third, this approach simplifies processing by removing the need to estimate $\hat{s}_i$, thereby reducing computational complexity and processing time, which makes the phase-noise estimation process more efficient and suitable for real-time applications. Finally, this approach ensures consistent performance across transceiver paths, as all IM tones have positive frequency offsets, the fixed sign parameter guarantees consistent and accurate phase-noise compensation across all received signals in a distributed radar system where multiple transceivers operate with independent local oscillators.

By adopting this fixed sign parameter method, the PN correction module 118 overcomes the inherent limitations of existing phase-noise estimation approaches. This modification enhances the robustness and accuracy of phase-noise compensation, ensuring reliable performance in distributed coherent radar systems where multiple transceivers operate with independent local oscillators.

FIG. 7 illustrates an example of the PN detector 702 component of the PN correction module 118 illustrated in FIG. 1. In other implementations, the PN detector 702 is a component that is separate from the PN correction module 118. In the illustrated example, the derotated and scaled baseband signal $x_1(t)$ is received at input 704 of the PN detector 702. This signal has already undergone initial processing to align the spill-over signal to DC and zero phase, as described above. First and second branches 706, 708 separate the baseband signal $x_1(t)$ into a real part $x_{1,Re}(t)$ and an imaginary part $x_{1,Im}(t)$. A Hilbert transform 710 is then performed on the real part $x_{1,Re}(t)$ to produce an intermediate transformed signal $x'_{1,Re}$. In at least some implementations, this is achieved in the frequency domain by first operating an FFT module 712 and then shifting the phase by -90 degrees for positive frequencies and +90 degrees for negative frequencies (-j sgn(f)). The intermediate transformed signal $X'_{1,Re}$ is further processed by being transformed back into the time domain by an inverse FFT module 714 to provide a transformed $x''_{1,Re}$. Since the sign parameter $\hat{s}_i$ is fixed to 1, there is no need to combine the transformed signal with outputs from any additional branches. In other implementations, other transforms and methods can be used to achieve a similar analytic signal generation, such as frequency-domain analytic construction, complex wavelet transforms, single-sideband filtering, all-pass phase shift filtering techniques, and the like.

The transformed signal $x''_{1,Re}$ and the imaginary part $x_{1,Im}(t)$ are provided to a subtraction module 716, which subtracts the transformed signal $x''_{1,Re}$ from the imaginary part $x_{1,Im}(t)$ to obtain a phase noise signal estimate $\hat{\phi}(n)$. The estimated phase noise $\hat{\phi}(n)$ is outputted from the PN detector 708 to the PN correction module 118 for compensation. For example, the PN correction module 118 subtracts the phase noise signal estimate $\hat{\phi}(n)$ from the baseband signal $x_1(t)$ to provide a phase noise corrected signal $x_2(t)$. The process may then repeat in an iterative way to further reduce the phase noise.

FIG. 8 illustrates an example of the PN correction block 118 of FIG. 1, implementing an iterative scheme that incorporates the PN detector 702 of FIG. 7. In at least some implementations, the PN correction module 118 begins by storing an initial estimate $\phi(t)$ of the phase noise $\phi(t)$ into an accumulator register 802, which is initialized to zero. This estimate is then converted to its phasor representation $e^{-j\hat{\phi}(t)}$ and used to demodulate the phase noise from the derotated signal $x_1(t)$, resulting in the de-noised signal $x_2(t)$.

At the first iteration, since the accumulator 802 is initialized to zero, the de-noised signal $x_2(t)$ is essentially the same as the input signal $x_1(t)$. The PN detector 702 processes $x_2(t)$ to produce an initial phase noise estimate $\hat{\phi}_1(t)$ using the fixed sign parameter method described above. This initial estimate $\hat{\phi}_1(t)$ is then conditioned based on prior knowledge about the spectral properties of the phase noise, such as its bandwidth and amplitude characteristics, to ensure that the estimate aligns with expected phase noise behavior.

The conditioned estimate is added to the accumulator register 802 to update the total phase noise estimate $\hat{\phi}(t)$ for the next iteration. In the second iteration, the updated estimate $\hat{\phi}(t)$ is used to demodulate the phase noise from $x_1(t)$ again, producing a new de-noised signal $x_2(t)$ with reduced residual phase noise. The PN detector 702 then processes this updated $x_2(t)$ to generate a residual phase noise estimate $\Delta\hat{\phi}(t)$. This residual estimate is further conditioned and added to the accumulator register 802, refining the total phase noise estimate $\hat{\phi}(t)$.

This iterative process continues, with each iteration progressively reducing the residual phase noise in $x_2(t)$ and refining the phase noise estimate $\hat{\phi}(t)$. The residual phase noise estimate $\Delta\hat{\phi}(t)$ becomes smaller with each iteration, and the accumulator output $\hat{\phi}(t)$ converges towards the true phase noise $\phi(t)$. The iterative loop can be terminated based on one or more conditions, such as a residual power threshold, convergence monitoring, signal quality indicators, and the like. For example, when the power of the residual phase noise estimate $\Delta\hat{\phi}(t)$ falls below a predefined threshold, this indicates that further iterations yield negligible improvements and the iterative loop is stopped. Also, if observing the time evolution of the residual estimates to detect when changes between iterations become insignificant, the iterative loop is stopped. Moreover, in high SNR situations, the DC value of $x_2(t)$ increases as more phase noise is removed. Monitoring this increase can help determine when the estimation is complete or successful. By implementing this iterative phase noise estimation and compensation loop, the radar system 100 effectively mitigates phase noise, enhancing the quality of the received signal and improving the accuracy of target detection and measurement.

Building upon the iterative phase noise estimation and compensation methodology described above, the PN correction module 118 is further configured to address additional challenges and optimize system performance through advanced techniques. Specifically, the PN correction module 118 incorporates methods for phase-noise compensation in the Doppler dimension and employs beamforming strategies to enhance the signal-to-noise ratio (SNR), thereby improving phase-noise estimation performance.

For example, the methods described above are for estimating the phase noise in each chirp of a chirp-train. After estimation, the phase noise can be compensated by derotating each time-domain sample of the noisy input signal according to:

$$x_c(k) = x(k) \cdot \exp\big(-j \cdot PN(k)\big) \qquad \text{(EQ. 28)},$$

where $x(k)$ represents the $k$-th chirp's time-domain sample of the noisy input signal, and $PN(k)$ is the estimated phase noise for the $k$-th chirp. This derotation effectively removes the phase noise in each chirp. However, it does not correct the average phase offset introduced by phase noise of each chirp. This is because the estimates of the PN detector 702 are inherently DC free, meaning their average value is null. Without correcting the initial phase, referred to here as the slow-time phase noise (PN) per chirp, ridges will appear in the Doppler dimension of the range-Doppler map, representing the most significant distortion caused by phase noise in the radar range-Doppler map. These ridges are effectively suppressed by the approach described below.

To correct the slow time PN, the PN correction module 118 leverages the fact that the spill-over signal is equivalent to a stationary target. Therefore, the phase for the spill-over should remain consistent across subsequent chirps. Consequently, all samples in each chirp $k$ are derotated with a phase shift $\Delta\psi(k)$ equal to the slow time PN, and available as the phase of the spill over bin in the range FFT (which was not affected by the fast time phase noise removal because it is inherently DC free), such that the initial phase change due to target velocity, is consistent across chirps. Specifically, for the range-bin including the spill-over signal, the phase must be maintained the same in subsequent chirps. This derotation with $\Delta\psi(k)$ of all samples in chirp $k$ removes the slow varying part of phase noise, which observed once per chirp typically appears as white noise (the chirp duration is typically longer than the phase noise decorrelation time), preventing ridges along Doppler from appearing in the range-Doppler map.

In at least some implementations, the correction procedure for the initial phase may be slightly adapted in cases where multiple transmitters (TXs) are active and Doppler Division Multiple Access (DDMA) encoding is applied. DDMA encoding is achieved by applying different phases to the transmitted signal of each TX during subsequent chirps. With $p$ TXs, $p$ different phases are cyclically used during subsequent chirps. Consequently, the phase represented by the complex value in the range-bin of the spill-over signal should be consistent each $k \cdot p$-th chirp, where $k \in \mathbb{N}$, in the chirp train, instead of each subsequent chirp. To achieve this without corrupting the phase due to DDMA encoding, the average phase in the range bin corresponding to the spill-over signal of each $k \cdot p$-th chirp is computed. In the next step, the initial phase is corrected to match the average phase of each $k \cdot p$-th chirp. This compensation ensures that the initial phase noise does not introduce artifacts in the Doppler dimension, thereby maintaining the integrity of the range-Doppler map and enhancing the overall accuracy of target detection.

An alternative approach includes removing the a priori known DDMA phases from the range FFT spill-over peak. The peak of the FFT of a signal has a phase which equals the average phase of the signal in the observation interval. The range FFT spill-over peak has 3 terms. The first term is a DOA term equal for all chirps on one RX antenna, which can be disregarded. The second term is an average phase noise across the chirp, which is of interest. The third term is a combined DDMA phase term. There is no doppler phase since the spill over is static. For every chirp $n$, the phase $a(n,m)$ impressed by every TX antenna $m$ of one radar head is known. The combined phase contribution per chirp of all antennas is a known function of $a(n,m)$. For the case of 2-DDMA, for example, such phase term equal to $a(n)/2$ and can be subtracted from the FFT peak phase of each chirp leaving only the slow time phase noise.

The effectiveness of phase-noise extraction from the received Frequency-Modulated Continuous Wave (FMCW) radar signal significantly depends on the SNR of the received spill-over signal. The received spill-over signal is relatively weak because the radar sensors are placed adjacent to each other, and the antennas are optimized to have high gain at boresight (the central axis) and consequently low gain at $\pm 90$ degrees. Additionally, the received signal can be weak during certain chirps due to TX beamforming, which occurs during each DDMA code in a direction other than sideward.

As such, to improve phase-noise estimation performance, one or more measures are implemented by the PN correction module 118. A first measure is receive (RX) beamforming to maximize the received spill-over signal power, and a second measure is the application of different DDMA codes to ensure that during none of the chirps the received spill-over signal power is highly attenuated. In some experiments, beamforming provides an SNR gain of 6 dB, and DDMA code adaptation offers an additional gain of 11 dB, although additional gains are applicable as well.

In at least some implementations, beamforming is achieved through the weighted summation of the received signals from multiple RX antennas. The complex-valued weights determine the direction in which the gain is maximized. Adaptation of DDMA codes, in at least some implementations, is accomplished by using different combinations of phase shifts on the TX antennas during each chirp. Different phase shifts result in different beam patterns for each chirp. Experimental results demonstrate that for a sensor with two TX antennas, the received SNR can be optimized by adding a fixed phase rotation of $\frac{\pi}{4}$ radians to the DDMA codes of one of the two TXes. For sensors with more antennas, different phase shifts can be applied to effectively optimize the received SNR.

The application of these beamforming techniques ensures that the spill-over signal maintains sufficient SNR across all chirps, thereby enhancing the reliability and accuracy of phase-noise estimation. By maximizing the received spill-over signal power through RX beamforming and preventing significant attenuation through DDMA code adaptation, the system achieves improved performance in diverse operational scenarios.

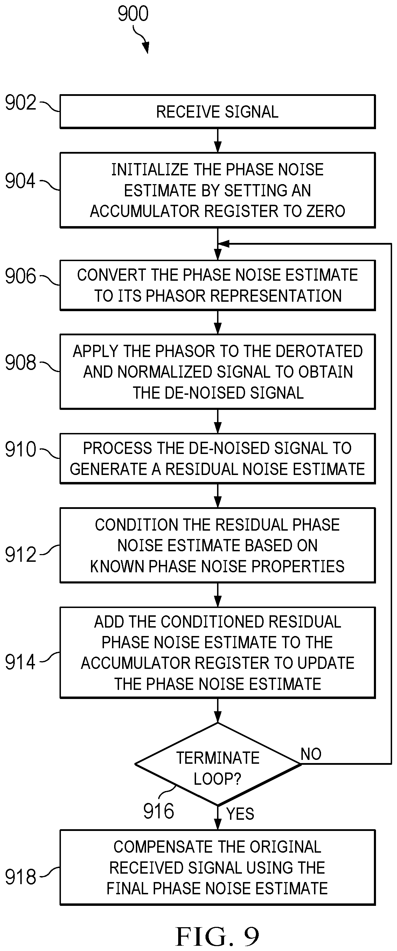

FIG. 9 is a diagram illustrating an example method 900 of phase noise estimation and compensation within a radar system, such as the radar system 100 of FIG. 1. This method outlines the iterative process employed by the PN correction module 118 to mitigate phase noise and enhance signal quality for accurate target detection and measurement. It should be understood that the processes described below with respect to method 900 have been described above in greater detail with reference to FIG. 1 to FIG. 8. The method 900 is not limited to the sequence of operations shown in FIG. 9, as at least some of the operations can be performed in parallel or in a different sequence. Moreover, in at least some implementations, the method 900 can include one or more different operations than those shown in FIG. 9.

At block 902, the PN correction module 118 receives the original received signal $x(t)$ through the radar system's antennas 104. This signal undergoes initial preprocessing, which includes down-conversion to baseband, filtering to remove unwanted frequency components, and digitization via an ADC. These preprocessing steps converting the high-frequency analog signal into a manageable digital form suitable for subsequent digital signal processing tasks.

At block 904, the PN correction module 118 initializes the phase noise estimate $\hat{\phi}(t)$ by setting the accumulator register 802 to zero. This initialization establishes the starting point for the iterative estimation process, ensuring that the initial phase noise estimate does not introduce any bias. At block 906, the current phase noise estimate $\hat{\phi}(t)$ stored in the accumulator register 802 is converted into its phasor representation $e^{-j\hat{\phi}(t)}$. This phasor is used in the subsequent demodulation step, as it facilitates the compensation of the estimated phase noise from the received signal.

At block 908, the phasor $e^{-j\hat{\phi}(t)}$ is applied to the derotated signal $x_1(t)$, resulting in the de-noised signal $x_2(t)$. This application effectively derotates the signal by compensating for the estimated phase noise, thereby isolating the residual phase noise components present in $x_2(t)$. At block 910, the PN detector 702 processes the de-noised signal $x_2(t)$ to generate a residual phase noise estimate $\Delta\hat{\phi}(t)$ using the fixed sign parameter method described above. In at least some implementations, generating the phase noise signal estimate includes converting the derotated signal $x_1(t)$ to a frequency domain signal, subtracting magnitudes of negative frequencies of the frequency domain signal from positive frequencies to create an intermodulation signal, and fixing a sign parameter associated with all intermodulation tones in the intermodulation signal to 1. For example, a Hilbert transform is applied to the real component of $x_2(t)$ to produce a transformed signal. In at least some implementations, applying the Hilbert transform includes performing a Fourier transform on the real component to generate a frequency domain representation of the transformed signal. The PN detector 702 then uses the fixed sign parameter to modify the intermodulation tones and generate a modified frequency domain signal. Finally, an inverse Fourier transform is performed on this modified frequency domain signal to generate the transformed signal. This residual estimate captures the remaining phase noise after the initial compensation and is used to refine the overall phase noise estimate.

At block 912, the residual phase noise estimate $\Delta\hat{\phi}(t)$ is conditioned based on prior knowledge of the phase noise's spectral properties, such as its bandwidth and amplitude characteristics. This conditioning process, in at least some implementations, includes removing a known phase noise spectrum from the residual estimate to improve accuracy and ensure that the refined phase noise estimate aligns with expected phase noise behavior. By incorporating known spectral properties, the accuracy and reliability of the compensation process are enhanced. At block 914, the conditioned residual phase noise estimate $\Delta\hat{\phi}(t)$ is added to the accumulator register 802, thereby updating the total phase noise estimate $\hat{\phi}(t)$ for the next iteration. This accumulation step incrementally refines the phase noise estimate, progressively reducing the residual phase noise in $x_2(t)$.

At block 916, termination criteria are evaluated to determine whether the iterative process should continue or conclude. If the termination conditions are not met, the process loops back to block 904 for another iteration, thereby further refining the phase noise estimate $\hat{\phi}(t)$. This iterative loop continues, with each cycle progressively reducing the residual phase noise in $x_2(t)$ and enhancing the accuracy of $\hat{\phi}(t)$. At block 918, if one or more termination criteria are satisfied, the loop is concluded and the final phase noise estimate $\hat{\phi}(t)$ is used to compensate the original received signal $x(t)$ by multiplying it with $e^{-j\hat{\phi}(t)}$, thereby generating a phase noise mitigated signal, as described above.

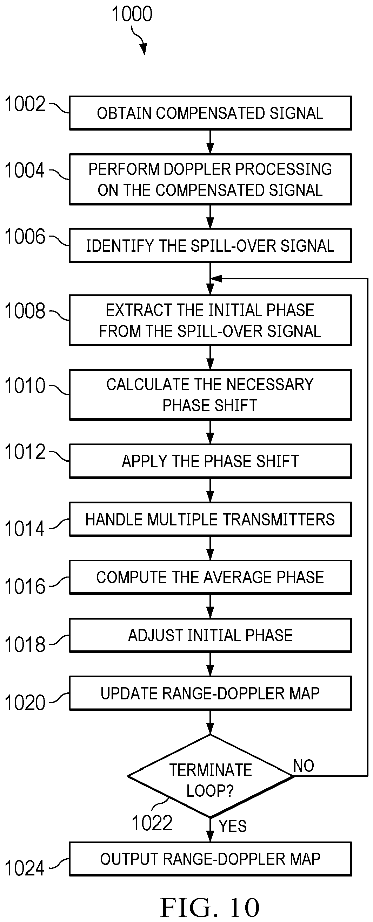

FIG. 10 is a diagram illustrating an example method of phase-noise compensation in the Doppler dimension within a radar system, such as the radar system 100 of FIG. 1. This method details the processes employed by the PN correction module 118 to mitigate phase noise artifacts in the Doppler dimension of the range-Doppler map, thereby enhancing target detection accuracy. It should be understood that the processes described below with respect to method 1000 have been described above in greater detail with reference to FIG. 1 to FIG. 8. The method 1000 is not limited to the sequence of operations shown in FIG. 10, as at least some of the operations can be performed in parallel or in a different sequence. Moreover, in at least some implementations, the method 1000 can include one or more different operations than those shown in FIG. 10.

At block 1002, the radar system 100 obtains the compensated signal $x_c(k)$ as described above. This signal has undergone initial phase noise compensation through the iterative loop described in FIG. 9 and represents the de-noised signal for the $k$-th chirp in the chirp-train. At block 1004, the radar system 100 performs Doppler processing on the compensated signal $x_c(k)$. This involves, for example, applying FFT across the chirp-train to generate a range-Doppler map, which visualizes target detections with range on one axis and Doppler (velocity) on the other.

At block 1006, the radar system 100 identifies the spill-over signal within the range-Doppler map. The spill-over signal corresponds to the most prominent target reflection and is treated as a stationary reference point for phase-noise compensation in the Doppler dimension. At block 1008, the radar system 100 extracts the initial phase $\psi(k)$ from the range-bin containing the spill-over signal for each chirp $k$. This initial phase is helps maintain consistency across chirps and preventing phase noise-induced artifacts in the Doppler dimension. At block 1010, the radar system 100 calculates the phase shift $\Delta\psi(k)$ to be used for correcting the initial phase of each chirp $k$. This calculation ensures that the initial phase remains consistent across subsequent chirps, thereby preventing the formation of ridges in the Doppler dimension of the range-Doppler map.

At block 1012, the radar system 100 applies the phase shift $\Delta\psi(k)$ to all samples within the $k$-th chirp. This derotation aligns the initial phase across chirps, effectively correcting the initial phase noise and mitigating Doppler dimension artifacts. At block 1014, the radar system 100 system handles multiple transmitters (TXs) by adapting the phase shift calculations to account for Doppler Division Multiple Access (DDMA) encoding. When multiple TXs are active, each TX applies unique phase shifts to its transmitted signals during subsequent chirps to prevent interference. At block 1016, the radar system 100 computes the average phase $\overline{\psi}(k \cdot p)$ for each $k \cdot p$-th chirp, where $p$ represents the number of active TX antennas. This average phase is calculated for the range-bin corresponding to the spill-over signal to maintain phase consistency across chirps while accommodating DDMA encoding.

At block 1018, the radar system 100 adjusts the initial phase of each $k \cdot p$-th chirp to match the computed average phase $\overline{\psi}(k \cdot p)$. This adjustment ensures that the phase noise compensation remains accurate even in the presence of multiple TXs and varying DDMA codes. At block 1020, the radar system 100 updates the range-Doppler map with the corrected phases. This updated map reflects the mitigated phase noise effects in the Doppler dimension, resulting in a cleaner and more accurate representation of target detections. At block 1022, the radar system 100 determines if the processing loop should be terminated based on evaluating the integrity of the Doppler dimension compensation by analyzing the range-Doppler map for the presence of ridges or other artifacts. This evaluation ensures that the phase noise compensation has been successfully applied and that the Doppler dimension remains free from phase noise-induced distortions.

If residual artifacts are detected at block, the system loops back to block 1008 to recalculate and reapply the phase shifts. This iterative refinement process continues until the range-Doppler map meets the desired quality standards, free from phase noise-induced artifacts. At block 1024, once the Doppler dimension is successfully compensated and the range-Doppler map is artifact-free, the process terminates and the compensated range-Doppler map is output. The compensated range-Doppler map is then utilized for accurate target detection and measurement, leveraging the enhanced signal quality achieved through effective phase noise mitigation.

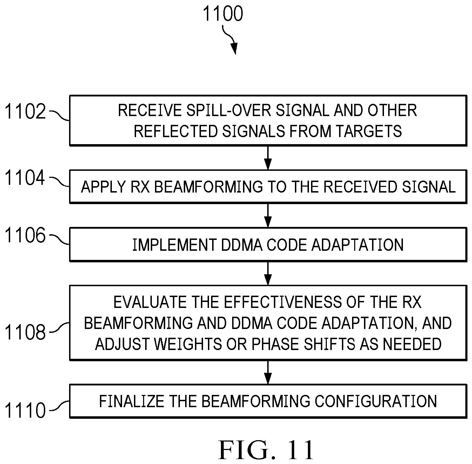

FIG. 11 is a diagram illustrating an example method 1100 of beamforming to optimize SNR and improve phase-noise estimation performance within a radar system, such as the radar system 100 of FIG. 1. This method details the processes employed by the radar system 100 to enhance the quality of received signals, thereby facilitating more accurate phase-noise estimation and overall system performance. It should be understood that the processes described below with respect to method 1100 have been described above in greater detail with reference to FIG. 1 to FIG. 8. The method 1100 is not limited to the sequence of operations shown in FIG. 11, as at least some of the operations can be performed in parallel or in a different sequence. Moreover, in at least some implementations, the method 1100 can include one or more different operations than those shown in FIG. 11.

At block 1102, the radar system 100 receives the spill-over signal along with other reflected signals from targets. Due to the physical placement of radar sensors beside each other and the high-gain configuration of antennas optimized for boresight, the spill-over signal's SNR may be relatively weak, particularly at angles of +90 and -90 degrees. To address this, the radar system 100 applies beamforming techniques to maximize the SNR of the spill-over signal. Specifically, RX beamforming is performed by utilizing adaptive weights, which involve a weighted summation of the signals from multiple RX antennas 106. These weights are complex-valued and are adjusted to enhance the received signal strength from the desired direction, thereby improving the overall SNR.

At block 1106, the radar system 100 further enhances performance by implementing Doppler Division Multiple Access (DDMA) code adaptation. In at least some implementations, this involves applying phase shifts to the TX antennas during each chirp, creating varying beam patterns that prevent heavy attenuation of the spill-over signal's power in any chirp. Different combinations of phase shifts are used, and for a setup with two TX antennas 104, SNR optimization is achieved by adding a fixed phase rotation of $\pi$ to the DDMA codes of one TX antenna 104. In implementations with more than two TX antennas 104, different phase shifts are applied to optimize the SNR further.

At block 1108, the radar system 100 evaluates the effectiveness of the RX beamforming and DDMA code adaptation. At block 1110, if the SNR of the spill-over signal is sufficiently enhanced, the beamforming configuration is finalized. Otherwise, adjustments to the adaptive weights or phase shifts may be made to further optimize phase noise estimation performance across the radar system. This approach ensures that the radar system 100 maintains a high SNR for the spill-over signal, facilitating accurate phase-noise estimation and improving overall system performance.

Note that not all of the activities or elements described above in the general description are required, that a portion of a specific activity or device may not be required, and that one or more further activities may be performed or elements included in addition to those described. Still further, the order in which activities are listed are not necessarily the order in which they are performed. Also, the concepts have been described with reference to specific implementations. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

One or more of the elements described above is circuitry designed and configured to perform the corresponding operations described above. Such circuitry, in at least some implementations, is any one of, or a combination of, a hardcoded circuit (e.g., a corresponding portion of an application-specific integrated circuit (ASIC) or a set of logic gates, storage elements, and other components selected and arranged to execute the ascribed operations), a programmable circuit (e.g., a corresponding portion of a field programmable gate array (FPGA) or programmable logic device (PLD)), or one or more processors executing software instructions that cause the one or more processors to implement the ascribed actions. In some implementations, the circuitry for a particular element is selected, arranged, and configured by one or more computer-implemented design tools. For example, in some implementations the sequence of operations for a particular element is defined in a specified computer language, such as a register transfer language, and a computer-implemented design tool selects, configures, and arranges the circuitry based on the defined sequence of operations.

Within this disclosure, in some cases, different entities (which are variously referred to as "components", "units", "devices", "circuitry", etc.) are described or claimed as "configured" to perform one or more tasks or operations. This formulation of [entity] configured to [perform one or more tasks] is used herein to refer to structure (i.e., something physical, such as electronic circuitry). More specifically, this formulation is used to indicate that this physical structure is arranged to perform the one or more tasks during operation. A structure can be said to be "configured to" perform some task even if the structure is not currently being operated or used (e.g., a power supply is not connected to it). Thus, an entity described or recited as "configured to" perform some task refers to something physical, such as a device, circuitry, etc. This phrase is not used herein to refer to something intangible. Further, the term "configured to" is not intended to mean "configurable to". An unprogrammed field programmable gate array, for example, would not be considered to be "configured to" perform some specific function, although it could be "configurable to" perform that function after programming. Additionally, reciting in the appended claims that a structure is "configured to" perform one or more tasks is expressly intended not to be interpreted as having means-plus-function elements.

Benefits, other advantages, and solutions to problems have been described above with regard to specific implementations. However, the benefits, advantages, solutions to problems, and any feature(s) that may cause any benefit, advantage, or solution to occur or become more pronounced are not to be construed as a critical, required, or essential feature of any or all the claims. Moreover, the particular implementations disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular implementations disclosed above may be altered or modified and all such variations are considered within the scope of the disclosed subject matter. Accordingly, the protection sought herein is as set forth in the claims below.

Herein has been disclosed, according to a first aspect, a method of removing phase noise from a baseband signal in a radar system, the method comprising: responsive to receiving a baseband signal, derotating the baseband signal using parameters of a spill-over signal to generate a derotated signal; decomposing the derotated signal into a real component and an imaginary component; producing a transformed signal based on applying a transform on the real component to produce the transformed signal; generating a phase noise signal estimate by subtracting the transformed signal from the imaginary component; and applying the phase noise signal estimate to compensate the received baseband signal, resulting in a phase noise mitigated signal One or more embodiments further comprise: applying different DDMA codes with varying phase shifts on transmit antennas of the radar system during subsequent chirps. One or more embodiments further comprise: applying a fixed phase rotation of $\pi$ to the DDMA codes of one of the transmit antennas.

According to a further aspect, there is herein disclosed: a phase noise correction module for a radar system, the phase noise correction module configured to: derotate a received baseband signal using parameters of a spill-over signal to generate a derotated signal; decompose the derotated signal into a real component and an imaginary component; produce a transformed signal based on an application of a transform on the real component; generate a phase noise signal estimate by subtracting the transformed signal from the imaginary component; and apply the phase noise signal estimate to compensate the received baseband signal, resulting in a phase noise mitigated signal.

One or more embodiments are further configured to: perform Doppler processing on the phase noise mitigated signal to generate a range-Doppler map; identify the spill-over signal in the range-Doppler map as a stationary reference; and extract an initial phase from a range-bin of the spill-over signal and apply a phase shift to the phase noise mitigated signal to maintain phase consistency across chirps to reduce artifacts in a Doppler dimension. 18. One or more embodiments are further configured to: apply beamforming techniques to maximize a signal-to-noise ratio (SNR) of the spill-over signal; utilize adaptive weights to enhance a received signal strength from a desired direction; and adjust beamforming parameters to optimize phase noise estimation performance across the radar system.

According to a yet further aspect, there is disclosed: radar system comprising: at least one signal generator configured to generate a transmit signal; at least one transmit amplifier configured to amplify the transmit signal; at least one transmit antenna configured to transmit the amplified transmit signal; at least one receive antenna configured to receive reflected signals; at least one receiver amplifier configured to amplify the received reflected signals from the at least one receive antenna; at least one mixer configured to mix the amplified received signal with the transmit signal to generate an analog baseband signal; at least one analog-to-digital converter (ADC) configured to convert the analog baseband signal into a digital baseband signal; and at least one phase noise correction module configured to: derotate the digital baseband signal using parameters of a spill-over signal to generate a derotated signal; decompose the derotated signal into a real component and an imaginary component; apply a transform to the real component to produce a transformed signal; generate a phase noise signal estimate by subtracting the transformed signal from the imaginary component; and apply the phase noise signal estimate to compensate the digital baseband signal, producing a phase noise mitigated signal.

In one or more embodiments, the at least one phase noise correction module is configured to generate the phase noise signal estimate by: converting the derotated signal to a frequency domain signal; subtracting magnitudes of negative frequencies of the frequency domain signal from positive frequencies of the frequency domain signal to create an intermodulation signal; and fixing a sign parameter associated with all intermodulation tones in the intermodulation signal to 1.

**Claims**

1. A method of removing phase noise from a baseband signal in a radar system, the method comprising:

   responsive to receiving a baseband signal, derotating the baseband signal using parameters of a spill-over signal to generate a derotated signal;
   decomposing the derotated signal into a real component and an imaginary component;
   producing a transformed signal based on applying a transform on the real component to produce the transformed signal;
   generating a phase noise signal estimate by subtracting the transformed signal from the imaginary component; and
   applying the phase noise signal estimate to compensate the received baseband signal, resulting in a phase noise mitigated signal.

2. The method of claim 1, wherein the transform is a Hilbert transform.

3. The method of claim 1 or 2, wherein generating the phase noise signal estimate comprises:

   converting the derotated signal to a frequency domain signal;
   subtracting magnitudes of negative frequencies of the frequency domain signal from positive frequencies of the frequency domain signal to create an intermodulation signal; and
   fixing a sign parameter associated with all intermodulation tones in the intermodulation signal to 1.

4. The method of claim 3, wherein producing the transformed signal further comprises:

   performing a Fourier transform on an output of the transform to generate a frequency domain representation of the transformed signal;

using the fixed sign parameter to modify the intermodulation tones and generate a modified frequency domain signal; and

performing an inverse Fourier transform on the modified frequency domain signal to generate the transformed signal.

5. The method of any preceding claim, further comprising:

performing Doppler processing on the phase noise mitigated signal to generate a range-Doppler map;

identifying the spill-over signal in the range-Doppler map as a stationary reference; and

extracting an initial phase from a range-bin of the spill-over signal and applying a phase shift to the phase noise mitigated signal to maintain phase consistency across chirps to reduce artifacts in a Doppler dimension.

6. The method of claim 5, wherein applying the phase shift comprises:

applying the phase shift to each chirp to prevent ridges from forming in the Doppler dimension.

7. The method of claim 5 or 6, wherein applying the phase shift comprises:

adapting calculations of the phase shift for multiple active transmitters using Doppler Division Multiple Access (DDMA) encoding.

8. The method of any preceding claim, further comprising:

applying beamforming techniques to maximize a signal-to-noise ratio (SNR) of the spill-over signal;

utilizing adaptive weights to enhance a received signal strength from a desired direction; and

adjusting beamforming parameters to optimize phase noise estimation performance across the radar system.

9. The method of claim 8, wherein applying the beamforming techniques comprises:
performing weighted summation of received signals using complex-valued weights that optimize gain.

10. The method of any preceding claim, wherein applying the transform comprises:

performing a Fourier transform on the transformed signal to generate a frequency domain representation;

multiplying the frequency domain representation by $-j$ for positive frequencies to generate a modified frequency domain representation; and

applying an inverse Fourier transform on the modified frequency domain representation to yield the transformed signal.

11. The method of claim 1, wherein generating the phase noise signal estimate comprises:
removing a known phase noise spectrum from the phase noise signal estimate to improve accuracy.

12. A phase noise correction module for a radar system, the phase noise correction module configured to:

derotate a received baseband signal using parameters of a spill-over signal to generate a derotated signal;

decompose the derotated signal into a real component and an imaginary component;

produce a transformed signal based on an application of a transform on the real component;

generate a phase noise signal estimate by subtracting the transformed signal from the imaginary component; and

apply the phase noise signal estimate to compensate the received baseband signal,

resulting in a phase noise mitigated signal.

13. The phase noise correction module of claim 12, wherein the transform is a Hilbert transform.

14. The phase noise correction module of claim 12 or 13, configured to generate the phase noise signal estimate by:

converting the derotated signal to a frequency domain signal;

subtracting magnitudes of negative frequencies of the frequency domain signal from positive frequencies of the frequency domain signal to create an intermodulation signal; and

fixing a sign parameter associated with all intermodulation tones in the intermodulation signal to 1.

15. A radar system comprising:

at least one signal generator configured to generate a transmit signal;
at least one transmit amplifier configured to amplify the transmit signal;
at least one transmit antenna configured to transmit the amplified transmit signal;
at least one receive antenna configured to receive reflected signals;
at least one receiver amplifier configured to amplify the received reflected signals from the at least one receive antenna;
at least one mixer configured to mix the amplified received signal with the transmit signal to generate an analog baseband signal;
at least one analog-to-digital converter (ADC) configured to convert the analog baseband signal into a digital baseband signal; and
at least one phase noise correction module as claimed in any of claims 12 to 14.

**Amended claims in accordance with Rule 137(2) EPC.**

1. A method of removing phase noise from a baseband signal in a radar system (100), the method comprising:

responsive to receiving a baseband signal, derotating the baseband signal using parameters of a spill-over signal, being a direct path signal resulting from leakage between a transmitting and receiving antennas, to generate a derotated signal;
decomposing the derotated signal into a real component and an imaginary component;
producing a transformed signal based on applying a transform on the real component to produce the transformed signal;
generating a phase noise signal estimate by subtracting the transformed signal from the imaginary component; and
applying the phase noise signal estimate to compensate the received baseband signal, resulting in a phase noise mitigated signal.

2. The method of claim 1, wherein the transform is a Hilbert transform.

3. The method of claim 1 or 2, wherein generating the phase noise signal estimate comprises:

converting the derotated signal to a frequency domain signal;
subtracting magnitudes of negative frequencies of the frequency domain signal from positive frequencies of the frequency domain signal to create an intermodulation signal; and
fixing a sign parameter associated with all intermodulation tones in the intermodulation signal to 1.

4. The method of claim 3, wherein producing the transformed signal further comprises:

performing a Fourier transform on an output of the transform to generate a frequency domain representation of the transformed signal;
using the fixed sign parameter to modify the intermodulation tones and generate a modified frequency domain signal; and
performing an inverse Fourier transform on the modified frequency domain signal to generate the transformed signal.

5. The method of any preceding claim, further comprising:

performing Doppler processing on the phase noise mitigated signal to generate a range-Doppler map;
identifying the spill-over signal in the range-Doppler map as a stationary reference; and
extracting an initial phase from a range-bin of the spill-over signal and applying a phase shift to the phase noise mitigated signal to maintain phase consistency across chirps to reduce artifacts in a Doppler dimension.

6. The method of claim 5, wherein applying the phase shift comprises:
applying the phase shift to each chirp to prevent ridges from forming in the Doppler dimension.

7. The method of claim 5 or 6, wherein applying the phase shift comprises:
adapting calculations of the phase shift for multiple active transmitters using Doppler Division Multiple Access (DDMA) encoding.

8. The method of any preceding claim, further comprising:

   applying beamforming techniques to maximize a signal-to-noise ratio (SNR) of the spill-over signal;
   utilizing adaptive weights to enhance a received signal strength from a desired direction; and
   adjusting beamforming parameters to optimize phase noise estimation performance across the radar system.

9. The method of claim 8, wherein applying the beamforming techniques comprises:

   performing weighted summation of received signals using complex-valued weights that optimize gain.

10. The method of any preceding claim, wherein applying the transform comprises:

   performing a Fourier transform on the transformed signal to generate a frequency domain representation;
   multiplying the frequency domain representation by -j for positive frequencies to generate a modified frequency domain representation; and
   applying an inverse Fourier transform on the modified frequency domain representation to yield the transformed signal.

11. The method of claim 1, wherein generating the phase noise signal estimate comprises:
removing a known phase noise spectrum from the phase noise signal estimate to improve accuracy.

12. A phase noise correction module for a radar system (100), the phase noise correction module configured to:

   derotate a received baseband signal using parameters of a spill-over signal, being a direct path signal resulting from leakage between a transmitting and receiving antennas, to generate a derotated signal;
   decompose the derotated signal into a real component and an imaginary component;
   produce a transformed signal based on an application of a transform on the real component;
   generate a phase noise signal estimate by subtracting the transformed signal from the imaginary component; and
   apply the phase noise signal estimate to compensate the received baseband signal, resulting in a phase noise mitigated signal.

13. The phase noise correction module of claim 12, wherein the transform is a Hilbert transform.

14. The phase noise correction module of claim 12 or 13, configured to generate the phase noise signal estimate by:

   converting the derotated signal to a frequency domain signal;
   subtracting magnitudes of negative frequencies of the frequency domain signal from positive frequencies of the frequency domain signal to create an intermodulation signal; and
   fixing a sign parameter associated with all intermodulation tones in the intermodulation signal to 1.

15. A radar system comprising (100):

   at least one signal generator (configured to generate a transmit signal;
   at least one transmit amplifier configured to amplify the transmit signal;
   at least one transmit antenna (104) configured to transmit the amplified transmit signal;
   at least one receive antenna (106) configured to receive reflected signals;
   at least one receiver amplifier (112) configured to amplify the received reflected signals from the at least one receive antenna;
   at least one mixer (114) configured to mix the amplified received signal with the transmit signal to generate an analog baseband signal;
   at least one analog-to-digital converter, ADC, (116) configured to convert the analog baseband signal into a digital baseband signal; and
   at least one phase noise correction module (118) as claimed in any of claims 12 to 14.

FIG. 1

$\omega_n = -\omega_p$

$\omega_p$

$-2 \cdot \omega_p$

$2 \cdot \omega_p$

202-1   202-2

202-3  202-4

FIG. 2

f

306-1

306-2

302

HEAD 1

A

B

A

B

A

B

t

f

304

306-1

306-2

HEAD 2

A

B

A

B

A

B

t

FIG. 3

302
HEAD 1

402-1

b12

0

f

304
HEAD 2

402-2

m22

0

20 MHz

f

$\Delta f_{LO}$

FIG. 4

302
HEAD 1

BISTATIC-SPILL-OVER

504

ONLY PHASE-NOISE,
NO TARGETS

502-1

0

f

304
HEAD 2

MONOSTATIC-SPILL-OVER

506

502-2

0

20 MHz

f

$\Delta f_{LO}$

FIG. 5

602

T1 RECEIVED SIGNAL

0

604

T2 SELECT AND SHIFT

0

604

T3 MIRROR

606          606

0

608

T4 CLEAN

0

FIG. 6

FIG. 7

PN-ESTIMATION AND CORRECTION  118

702  PN-DETECTOR

x2(t) DE-NOISED

x1(t) DE-ROTATED

$e^{-j\hat{\phi}(t)}$

802  $pn_{accu}$  Pn ACCUMULATOR INIT TO 0

CONDITION PN

$\phi_{xx}(f)$ A PRIORI PN PSD

$\Delta\phi(t)$  PHASE NOISE RESIDUALS AT EACH ITERATION

$\hat{\phi}(t)$  PHASE NOISE ESTIMATE

$x_{Denoised}(t)$

$\frac{1}{A_0} e^{-j(\omega_0 t + \theta_0)}$

$\omega_0, \theta_0, A_0$

PEAK

FFT

x(t)

PHASE NOISE ESTIMATE

FIG. 8

900

902 — RECEIVE SIGNAL

904 — INITIALIZE THE PHASE NOISE ESTIMATE BY SETTING AN ACCUMULATOR REGISTER TO ZERO

906 — CONVERT THE PHASE NOISE ESTIMATE TO ITS PHASOR REPRESENTATION

908 — APPLY THE PHASOR TO THE DEROTATED AND NORMALIZED SIGNAL TO OBTAIN THE DE-NOISED SIGNAL

910 — PROCESS THE DE-NOISED SIGNAL TO GENERATE A RESIDUAL NOISE ESTIMATE

912 — CONDITION THE RESIDUAL PHASE NOISE ESTIMATE BASED ON KNOWN PHASE NOISE PROPERTIES

914 — ADD THE CONDITIONED RESIDUAL PHASE NOISE ESTIMATE TO THE ACCUMULATOR REGISTER TO UPDATE THE PHASE NOISE ESTIMATE

TERMINATE LOOP?  NO

916  YES

918 — COMPENSATE THE ORIGINAL RECEIVED SIGNAL USING THE FINAL PHASE NOISE ESTIMATE

FIG. 9

1000

1002 — OBTAIN COMPENSATED SIGNAL

1004 — PERFORM DOPPLER PROCESSING
ON THE COMPENSATED SIGNAL

1006 — IDENTIFY THE SPILL-OVER SIGNAL

1008 — EXTRACT THE INITIAL PHASE
FROM THE SPILL-OVER SIGNAL

1010 — CALCULATE THE NECESSARY
PHASE SHIFT

1012 — APPLY THE PHASE SHIFT

1014 — HANDLE MULTIPLE TRANSMITTERS

1016 — COMPUTE THE AVERAGE PHASE

1018 — ADJUST INITIAL PHASE

1020 — UPDATE RANGE-DOPPLER MAP

TERMINATE
LOOP?          NO

1022          YES

1024 — OUTPUT RANGE-DOPPLER MAP

FIG. 10

1100

1102 — RECEIVE SPILL-OVER SIGNAL AND OTHER REFLECTED SIGNALS FROM TARGETS

1104 — APPLY RX BEAMFORMING TO THE RECEIVED SIGNAL

1106 — IMPLEMENT DDMA CODE ADAPTATION

1108 — EVALUATE THE EFFECTIVENESS OF THE RX BEAMFORMING AND DDMA CODE ADAPTATION, AND ADJUST WEIGHTS OR PHASE SHIFTS AS NEEDED

1110 — FINALIZE THE BEAMFORMING CONFIGURATION

FIG. 11

Europäisches Patentamt

European Patent Office

Office européen des brevets

## EUROPEAN SEARCH REPORT

**Application Number**

EP 25 15 2338

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | EP 4 567 455 A1 (NXP BV [NL]) 11 June 2025 (2025-06-11) * abstract * * page 5, line 28 - line 49 * * figures 1-11 *<br>----- | | INV.<br>G01S7/35<br>G01S7/40<br>G01S13/34<br>G01S13/44<br>G01S13/58<br>G01S13/87 |
| A | US 2021/080540 A1 (VOSSIEK MARTIN [DE] ET AL) 18 March 2021 (2021-03-18) * abstract * * figures 1-5 *<br>----- | 1-15 | |
| A | US 2023/314562 A1 (VAN HOUTUM WILHELMUS JOHANNES [NL] ET AL) 5 October 2023 (2023-10-05) * paragraph [0046] - paragraph [0050] * * paragraph [0064] * * paragraph [0085] - paragraph [0097] * * figures 1-15 *<br>----- | 1-15 | |

**TECHNICAL FIELDS SEARCHED (IPC)**

G01S

The present search report has been drawn up for all claims

| Place of search | Date of completion of the search | Examiner |
|---|---|---|
| Munich | 24 June 2025 | Köppe, Maro |

EPO FORM 1503 03.82 (P04C01)

## ANNEX TO THE EUROPEAN SEARCH REPORT
## ON EUROPEAN PATENT APPLICATION NO.

EP 25 15 2338

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2025

| Patent document cited in search report | | | Publication date | Patent family member(s) | | Publication date |
|---|---|---|---|---|---|---|
| EP | 4567455 | A1 | 11-06-2025 | CN | 120122065 A | 10-06-2025 |
| | | | | EP | 4567455 A1 | 11-06-2025 |
| | | | | US | 2025189621 A1 | 12-06-2025 |
| US | 2021080540 | A1 | 18-03-2021 | CN | 110741274 A | 31-01-2020 |
| | | | | DE | 102017110404 A1 | 15-11-2018 |
| | | | | EP | 3622311 A1 | 18-03-2020 |
| | | | | US | 2021080540 A1 | 18-03-2021 |
| | | | | WO | 2018206290 A1 | 15-11-2018 |
| US | 2023314562 | A1 | 05-10-2023 | CN | 116893399 A | 17-10-2023 |
| | | | | EP | 4258019 A1 | 11-10-2023 |
| | | | | US | 2023314562 A1 | 05-10-2023 |

EPO FORM P0459

For more details about this annex : see Official Journal of the European Patent Office, No. 12/82